# EUROPÄISCHE PATENTSCHRIFT

(11) **EP 3 412 246 B1**
(45) Veröffentlichungstag und Bekanntmachung des Hinweises auf die Patenterteilung: **08.07.2020**
(21) Anmeldenummer: 18174880.7
(22) Anmeldetag: 29.05.2018
(51) Int. Cl.: A61C 13/00, A61C 8/00, B23Q 3/06

(54) **HALTER FÜR ABUTMENTROHLING FÜR ZAHN-IMPLANTATE**
HOLDER FOR ABUTMENT BLANK FOR TOOTH IMPLANTS
SUPPORT POUR ÉBAUCHE DE PILIER POUR IMPLANTS DENTAIRES

(30) Priorität: 01.06.2017 DE 102017112078
(43) Veröffentlichungstag der Anmeldung: 12.12.2018
(73) Patentinhaber: Dental Direkt GmbH, 32139 Spenge (DE)
(72) Erfinder: Dreger, Horst, 61130 Nidderau (DE)
(74) Vertreter: Knoop, Philipp

(56) Entgegenhaltungen:
- EP-A- 0 160 797
- EP-A1- 2 837 357
- DE-A1-102012 102 059
- KR-A- 20120 055 437
- US-A- 5 342 696
- US-A1- 2002 074 675
- US-A1- 2011 171 603

## Beschreibung

Die Erfindung betrifft einen Halter für mindestens ein Abutment für Zahn-Implantate zum Einspannen in ein Dentalfrässystem, wobei das Abutment einen Zentralabschnitt aufweist, der als zylindrischer Körper ausgestaltet ist und an einer Axialseite in einen zapfenförmigen Befestigungsabschnitt mit kleinerem Durchmesser zur Befestigung des Abutments am Halter übergeht.

Abutments für Zahn-Implantate werden auch als Aufbauten oder Prefab bezeichnet. Sie dienen als Bindeglied zwischen dem eigentlichen Implantat und dem Zahnersatz des Patienten. Abutments werden als einheitliche Rohlinge vorgefertigt und müssen dann in einer Dentalfräsmaschine individuell an die Erfordernisse sowohl des Implantats als auch des Zahnersatzes angepasst werden. Zum Einspannen der Abutments in ein Dentalfrässystem sind Halter vorgesehen, an denen in der Regel mehrere Abutments befestigt werden. Die Befestigung muss die Bearbeitung der Abutments durch die Fräsmaschine ermöglichen. Dies bedeutet insbesondere, dass die Halterung möglichst starr sein muss, um Schwingungen der Abutments während der Bearbeitung so gering wie möglich zu halten. Andererseits muss die Halterung so ausgestaltet sein, dass sie ein Verdrehen der Abutments während der Bearbeitung verhindert, denn die auszufräsende Form ist in der Regel nicht rotationssymmetrisch zur zentralen Rotationsachse eines Abutments.

Ein Halter der eingangs genannten Art und zugehörige Abutments sind aus der DE 10 2012 102 059 B4 und der US 5 342 696 A bekannt. Die bekannten Abutments besitzen drei Längsabschnitte, wobei ein zylindrischer Längsabschnitt mit großem Durchmesser auf beiden Axialseiten jeweils in einen kleineren Längsabschnitt mit geringerem Durchmesser übergeht. Die bekannte Halterung spannt diese Abutments an beiden Seiten ein, wobei beide kleineren Längsabschnitte zwischen entsprechenden Halterelementen eingeklemmt werden. Hierfür müssen in der DE 10 2012 102 089 B4 drei Einspannelemente montiert werden. Um unbeabsichtigte Verdrehungen der Abutments zu unterbinden, sind die kleineren Längsabschnitte mit Abflachungen versehen, die mit korrespondierenden Klemmenflächen der Haltevorrichtung formschlüssig zusammenwirken. Die bekannte Haltevorrichtung und die zugehörigen Abutments sind kompliziert aufgebaut. Die Herstellung und das Einspannen der Abutments erfordert daher jeweils einen großen Arbeitsaufwand. In der US 5 342 696 A greift zusätzlich ein Stift des Halters in einem Nut des Abutments, um eine Drehung des Abutments um die Längsachse zu verhindern. Die US 2002/074675 A1 und die EP 0 160 797 A offenbaren auch Abutmentrohlinge mit einer solchen Nut.

Aufgabe der Erfindung ist es, einen Halter und Abutments der eingangs genannten Art anzugeben, die einfach zu fertigen sind und ohne großen Aufwand in ein Dentalfrässystem eingespannt werden können.

Die Erfindung löst diese Aufgabe dadurch, dass der Halter eine Halterfläche aufweist, in der für jedes zu haltende Abutment eine zu einer gegenüberliegenden Gegenfläche des Halters durchgehende Befestigungsbohrung angeordnet ist, in die der Befestigungsabschnitt des Abutments aufnehmbar ist, so dass eine dem Befestigungsabschnitt umgebende Stirnfläche des Zentralabschnitts des Abutments an der Halterfläche angelegt, wobei der Befestigungsabschnitt mit einer axialen Gewindebohrung für eine von der Gegenfläche aus einzuschraubende Befestigungsschraube versehen ist, und dass die genannte Stirnfläche mit einer zum Befestigungsabschnitt benachbarten linearen Nut versehen ist, die mit einem Komplementär geformten, aus der genannten Halterfläche hervorragenden Grat formschlüssig in Eingriff bringbar ist. Die Erfindung hat den Vorteil, dass die Abutments am Halter nur einseitig eingespannt werden müssen. Dies geschieht auf einfache Weise durch Aufstecken des Abutments auf den Halter und Festziehen der zugehörigen Befestigungsschraube. Im Gegensatz zum Stand der Technik wird dabei nicht allein der Befestigungsabschnitt am Halter eingeklemmt, sondern eine relativ große Stirnfläche des Zentralabschnitts kommt in Kontakt mit der Halterfläche und wird mithilfe der Befestigungsschraube fest gegen die Haltefläche gepresst. Dabei werden das Abutment und der Halter so fest miteinander verbunden, dass Schwingungen des Abutments während des Fräsvorgangs weitgehend unterdrückt werden. Beim Gegenstand der Erfindung genügt daher mit Vorteil das einseitige Einspannen der Abutments, was die Anordnung und die Bedienung vereinfacht. Ein Einspannen der Abutments am gegenüberliegenden Ende ist nicht erforderlich. Darüber hinaus gewährleistet die mit dem Grat des Halters in Formschluss stehende lineare Nut des Abutments, dass es verdrehsicher am Halter fixiert ist.

Mit Vorteil ist der Halter im Wesentlichen quaderförmig ausgestaltet. Eine solche Form ist auf einfache Weise herstellbar und erweist sich als besonders zweckmäßig bezüglich der Anordnung der Bohrungen für die Befestigung der Abutments und zum Einspannen in das Dentalfrässystem.

In einer bevorzugten Ausführungsform ist die genannte Halterfläche mit drei linear nebeneinander angeordneten, durchgehenden Befestigungsbohrungen für die Halterung von drei Abutments versehen.

In Ausgestaltung der Erfindung ist vorgesehen, dass sich der Grat über die Länge des Halters und benachbart zu den Befestigungsbohrungen erstreckt. Ein solcher durchgehender Grat ist einfacher zu fertigen als separate Grate für jedes Abutment.

In vorteilhafter Weiterbildung der Erfindung ist der Halter mit zwei durchgehenden Einspannbohrungen zum Durchgang von zwei zum Einspannen des Halters in einem Dentalfrässystem bestimmten Einspannschrauben versehen, wobei die Einspannbohrungen in Längsrichtung zwischen den Befestigungsbohrungen und ihre Axialrichtung quer zur Axialrichtung der Befestigungsbohrungen angeordnet sind. Durch diese Maßnahme kann der Halter besonders kompakt ausgestaltet sein, ohne an Festigkeit zu verlieren.

Die Erfindung wird noch verbessert, indem eine zur Anlage an einer Einspannvorrichtung eines Dentalfrässystems vorgesehene Anlagefläche des Halters mit vorstehenden Noppen zum formschlüssigen Eingriff mit komplementären Positionierlöchern des Dentalfrässystems versehen ist. Hierdurch kann der Halter im Dentalfrässystem vollkommen exakt positioniert werden.

In einer vorteilhaften Ausführungsform sind die Befestigungsbohrungen als Stufenbohrungen ausgestaltet. Dabei sind an jeder der durch die Bohrung verbundenen Halterflächen jeweils eine nicht durchgehende Bohrung mit großem Durchmesser angeordnet, wobei die beiden größeren Bohrungen durch eine durchgehende Bohrung kleineren Durchmessers miteinander verbunden sind. Die größere Bohrung auf der Seite der Halterfläche nimmt den zapfenförmigen Befestigungsabschnitt des Abutments auf, während die größere Bohrung auf der gegenüberliegenden Gegenfläche des Halters einen Schraubenkopf aufnimmt, so dass der Schraubenkopf im Halter versenkt angeordnet ist. Der Gewindeabschnitt der Schraube ragt dann durch den Bohrungsabschnitt mit kleinerem Durchmesser und wird in den Befestigungsabschnitt des Abutments eingeschraubt.

Zur Erfindung gehört auch ein zum Halter passend ausgeformtes Abutment für Zahnimplantate mit einem zylindrischen Zentralabschnitt der an einer Axialseite in einen zapfenförmigen Befestigungsabschnitt übergeht, der zur Befestigung des Abutments an einem Halter zum Einspannen in ein Dentalfrässystem dient, wobei eine den Befestigungsabschnitt umgebende Stirnfläche des Zentralabschnitts mit einer zum Befestigungsabschnitt benachbarten linearen Nut versehen ist.

In einer bevorzugten Ausführungsform des Abutments ist der Befestigungsabschnitt zylinderförmig ausgestaltet. Dies vereinfacht die Herstellung des Abutments. Da durch die Erfindung eine Verdrehsicherung gewährleistet ist, kann auf Abflachungen des Befestigungsabschnitts oder dergleichen verzichtet werden.

Der Befestigungsabschnitt ist mit einer axialen Gewindebohrung für eine Befestigungsschraube versehen. Dies ermöglicht die einfache Montage des Abutments an einem erfindungsgemäßen Halter.

Eine bevorzugte Ausführungsform der Erfindung sieht vor, dass der Zentralabschnitt an seiner dem Befestigungsabschnitt abgewandten Axialseite in einen Verankerungsabschnitt mit kleinerem Durchmesser übergeht, der als Interface zum Zahnimplantat und zur Verankerung des Abutments am Zahnimplantat dient.

Eine vorteilhafte Weiterbildung der Erfindung sieht vor, dass der Verankerungsabschnitt zylindrisch ausgestaltet ist und eine zentrale Bohrung zum Durchgang einer Verankerungsschraube aufweist. Dies ermöglicht die Verankerung des Verankerungsabschnitts durch eine einfache Verankerungsschraube.

Ausführungsbeispiele der Erfindung werden nachfolgend anhand der Zeichnungen näher erläutert. Die Figuren zeigen im Einzelnen:
- Figur 1:: eine Draufsicht auf eine Längsseite eines erfindungsgemäßen Halters;
- Figur 2:: eine Draufsicht auf die Oberseite desselben Halters;
- Figur 3:: eine Draufsicht auf eine Schmalseite desselben Halters;
- Figur 4:: eine Draufsicht auf ein Abutment in einer ersten Ausführungsform;
- Figur 5:: eine Draufsicht auf die Oberseite eines erfindungsgemäßen Halters mit drei montierten Abutments;
- Figur 6:: einen Schnitt gemäß Linie A - A aus Figur 5;
- Figur 7:: eine perspektivische Darstellung eines erfindungsgemäßen Halters mit einem Abutment vor dessen Montage;
- Figur 8:: eine Seitenansicht eines erfindungsgemäßen Abutments in einer zweiten Ausführungsform;
- Figur 9:: eine Draufsicht auf eine erste Schmalseite desselben Abutments;
- Figur 10:: eine Draufsicht auf die andere Schmalseite desselben Abutments;
- Figur 11:: einen Schnitt gemäß Linie A - A in Figur 8.

Ein erfindungsgemäßer Halter 1 ist im Wesentlichen quaderförmig aufgebaut. Von seiner Oberseite 2 ausgehend sind zwei Einspannbohrungen 3 vorgesehen, die sich bis zur Unterseite 4 erstrecken. Die Einspannbohrungen 3 sind zum Einspannen des Halters 1 in einem nicht gezeigten Dentalfrässystem bestimmt. Die Unterseite 4 des Halters 1 ist als Anlagefläche zur Anlage im Dentalfrässystem vorgesehen. Des Weiteren ist die Unterseite 4 mit zwei vorstehenden Noppen 5 versehen, die zum formschlüssigen Eingriff mit komplementären, hier nicht gezeigten Positionslöchern des Dentalfrässystems bestimmt sind.

Der Halter 1 ist außerdem mit drei Befestigungsbohrungen 6 versehen, die von einer seitlichen Halterfläche 7 ausgehen und bis zu einer gegenüberliegenden Gegenfläche 8 durchgehen. Dabei sind die Befestigungsbohrungen 6 als Stufenbohrungen ausgestaltet, die auf der Seite der Halterfläche 7 einen ersten Bohrungsabschnitt 9 mit großem Durchmesser, einen daran anschließenden zweiten Bohrungsabschnitt 10 mit kleinerem Durchmesser und auf der Seite der Gegenfläche 8 einen wiederum daran anschließenden dritten Bohrungsabschnitt 11 mit wiederum größerem Durchmesser aufweist.

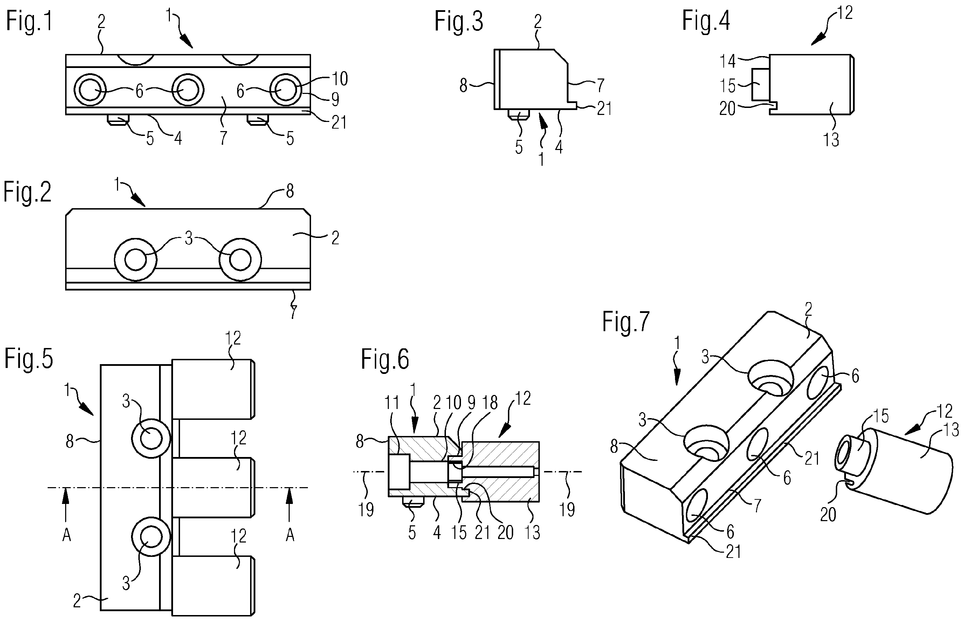

Wie man am besten in Figur 7 erkennt, sind die beiden Einspannbohrungen 3 in Längsrichtung des Halters 1 gesehen zwischen den drei Befestigungsbohrungen 6 angeordnet und zwar jeweils in einem der beiden Zwischenräume zwischen den drei Befestigungsbohrungen 6. Außerdem sind die Einspannbohrungen 3 rechtwinklig zu den drei Befestigungsbohrungen 6 angeordnet.

Ein erfindungsgemäßes Abutment 12, auch Aufbau oder Prefab genannt, besitzt einen zylindrischen Zentralabschnitt 13 und einen an einer ersten Axialseite 14 des Zentralabschnitts 13 angeordneten zapfenförmigen Befestigungsabschnitt 15, der einen kleineren Durchmesser 16 aufweist als der größere Durchmesser 17 des Zentralabschnitts 13. Der Befestigungsabschnitt 15 ist zur Befestigung des Abutments 12 am Halter 1 bestimmt und ist hierfür mit einer Gewindebohrung 18 versehen. Dabei wird das Abutment 12 auf den Halter 1 aufgesetzt, so dass der Befestigungsabschnitt 15 vom ersten Bohrungsabschnitt 9 der Befestigungsbohrung 6 aufgenommen wird. Dabei kommt die Stirnfläche 14 des Zentralabschnitts 13 des Abutments 12 in Kontakt mit der Halterfläche 7 des Halters 1. Zur weiteren Befestigung wird eine nicht gezeigte Befestigungsschraube von der Gegenfläche 8 des Halters 1 her in den dritten Bohrungsabschnitt 11 der Befestigungsbohrung 6 eingeführt und in die Gewindebohrung 18 des Befestigungsabschnitts 15 des Abutments 12 eingeschraubt. Nach dem Festziehen der genannten Befestigungsschraube wird die Stirnfläche 14 des Zentralabschnitts 13 des Abutments 12 fest gegen die Halterfläche 7 gepresst, so dass das Abutment 12 starr mit dem Halter 1 verbunden ist und Vibrationen des Abutments 12 während der Bearbeitung in dem Dentalfrässystem weitgehend eliminiert werden.

Um das Abutment 12 auch gegen Verdrehungen um seine Längsachse 19 zu sichern, ist die Stirnfläche 14 mit einer linearen Nut 20 versehen, die sich benachbart zum Befestigungsabschnitt 15 quer über die Stirnfläche 14 erstreckt. Bei dem auf dem Halter 1 montierten Abutment 12 kommt die linearen Nut 20 in Eingriff mit einem Grat 21 des Halters 1, wobei Nut 20 und Grat 21 formschlüssig ineinandergreifen und eine Drehung des Abutments 12 um die Längsachse 19 verhindern. Daher erstreckt sich der Grat 21 über die gesamte Länge des Halters 1 und verläuft benachbart zu den ersten Befestigungsabschnitten 9 der drei Befestigungsbohrungen 6. Ein Halter 1 mit drei montierten Abutments 12 ist in Figur 5 zu sehen.

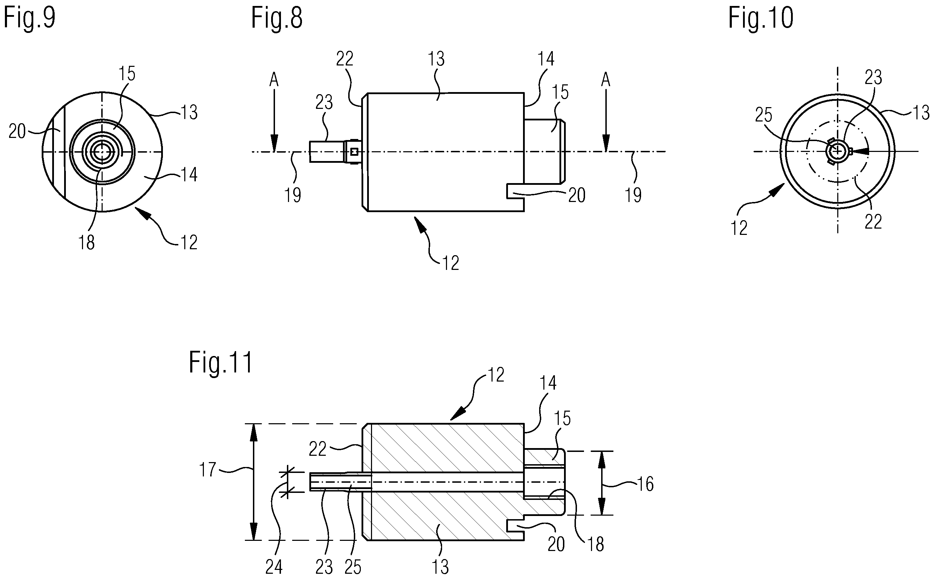

Die Figuren 8-11 zeigen eine zweite Ausführungsform eines erfindungsgemäßen Abutments 12, bei dem der Zentralabschnitt 13 auf seiner dem Befestigungsabschnitt 15 abgewandten zweiten Axialseite 22 mit einem Verankerungsabschnitt 23 versehen ist. Der Verankerungsabschnitt 23 ist ebenfalls zylinderförmig ausgestaltet, allerdings mit einem wesentlich kleineren Durchmesser 24 als der Durchmesser 17 des Zentralabschnitts 13. Der Verankerungsabschnitt 23 ist zur Verankerung des Abutments 12 an einem Zahnimplantat bestimmt und für diesen Zweck mit einer zentralen Bohrung 25 zum Durchgang einer nicht gezeigten Verankerungsschraube versehen, mit der er am Zahnimplantat fest geschraubt werden kann.

Die Erfindung stellt somit einen kompakten Halter 1 zur Verfügung, an dem ein erfindungsgemäßes Abutment 12 einseitig und drehsicher derart befestigt werden kann, dass auf eine zweiseitige Befestigung verzichtet werden kann.

### BEZUGSZEICHENLISTE

- 1: Halter
- 2: Oberseite
- 3: Einspannbohrung
- 4: Unterseite/Anlagefläche
- 5: Noppen
- 6: Befestigungsbohrung
- 7: Halterfläche
- 8: Gegenfläche
- 9: erster Bohrungsabschnitt
- 10: zweiter Bohrungsabschnitt
- 11: dritter Bohrungsabschnitt
- 12: Abutment
- 13: Zentralabschnitt
- 14: erste Axialseite/Stirnfläche
- 15: Befestigungsabschnitt
- 16: Durchmesser
- 17: Durchmesser
- 18: Gewindebohrung
- 19: Längsachse
- 20: lineare Nut
- 21: Grat
- 22: zweite Axialseite
- 23: Verankerungsabschnitt
- 24: Durchmesser
- 25: Bohrung

## Patentansprüche

1. Halter (1) für mindestens ein Abutment (12) für Zahnimplantate zum Einspannen in ein Dentalfrässystem, wobei das Abutment (12) einen Zentralabschnitt (13) aufweist, der als zylindrischer Körper ausgestaltet ist und an einer Axialseite in einen zapfenförmigen Befestigungsabschnitt (15) mit kleinerem Durchmesser zur Befestigung des Abutments (12) am Halter (1) übergeht, wobei der Halter (1) eine Halterfläche (7) aufweist, in der für jedes zu haltende Abutment (12) eine zu einer gegenüberliegenden Gegenfläche (8) des Halters (1) durchgehende Befestigungsbohrung (6) angeordnet ist, in die der Befestigungsabschnitt (15) des Abutments (12) derart aufnehmbar ist, dass eine den Befestigungsabschnitt (15) des Abutments (12) umgebende Stirnfläche (14) des Zentralabschnitts (13) des Abutments (12) an der Halterfläche (7) anliegt, wobei der Halter (1) einen aus der Halterfläche (7) hervorragenden Grat (21) aufweist, wobei der Grat (21) komplementär zu einer linearen Nut (20) geformt ist, mit welcher die Stirnfläche (14) des aufzunehmenden Abutments zum Befestigungsabschnitt (15) benachbart versehen ist, sodass die Nut (20) des aufzunehmenden Abutments formschlüssig in den Grat (21) in Eingriff bringbar ist.

2. Halter nach Anspruch 1, **dadurch gekennzeichnet, dass** er im Wesentlichen quaderförmig ausgestaltet ist.

3. Halter nach Anspruch 1 oder 2, **dadurch gekennzeichnet, dass** die genannte Halterfläche (7) mit drei linear nebeneinander angeordneten Befestigungsbohrungen (6) für die Halterung von drei Abutments (12) versehen ist.

4. Halter nach Anspruch 3, **dadurch gekennzeichnet, dass** sich der Grat (21) über die Länge des Halters (1) und benachbart zu den Befestigungsbohrungen (6) erstreckt.

5. Halter nach Anspruch 3 oder 4, **dadurch gekennzeichnet, dass** er mit zwei durchgehenden Einspannbohrungen (3) zum Durchgang von zwei zum Einspannen des Halters (1) in einem Dentalfrässystem bestimmten Einspannschrauben versehen ist, wobei die Einspannbohrungen (3) in Längsrichtung zwischen den Befestigungsbohrungen (6) und ihre Axialrichtung quer zur Axialrichtung der Befestigungsbohrungen (6) angeordnet sind.

6. Halter nach einem der vorhergehenden Ansprüche, **dadurch gekennzeichnet, dass** eine zur Anlage an einer Einspannvorrichtung eines Dentalfrässystems vorgesehene Anlagefläche (4) des Halters (1) mit vorstehenden Noppen (5) zum formschlüssigen Eingriff mit komplementären Positionslöchern des Dentalfrässystems versehen ist.

7. Halter nach einem der vorhergehenden Ansprüche, **dadurch gekennzeichnet, dass** die Befestigungsbohrungen (6) als Stufenbohrungen ausgestaltet sind.

8. Abutment (12) für Zahnimplantate zum Einspannen in ein Dentaifrässystern, mit einem zylindrischen Zentralabschnitt (13), der an einer Axialseite (14) In einen zapfenförmigen Befestigungsabschnitt (15) mit kleinerem Durchmesser (16) übergeht, der zur Befestigung des Abutments (12) an einem Halter (1) zum Einspannen in ein Dentalfrässystem dient, wobei der Halter (1) eine Halterfläche (7) aufweist, in der für jedes zu haltende Abutment (12) eine zu einer gegenüberliegenden Gegenfläche (8) des Halters (1) durchgehende Befestigungsbohrung (6) angeordnet ist und aus welcher Halterfläche (7) ein Grat (21) hervorragt, wobei eine den Befestigungsabschnitt (15) umgebende Stirnfläche (14) des Zentralabschnitts (13) mit einer zum Befestigungsabschnitt (15) benachbarten linearen Nut (20) versehen ist, wobei die Nut (20) komplementär zu dem Grat (21) des Halters (1) geformt ist, sodass die Nut (20) formschlüssig in den Grat (21) in Eingriff bringbar ist, wobei der Befestigungsabschnitt (15) derart in die Befestigungsbohrung (6) des Halters (1) aufnehmbar ist, dass die Stirnfläche (14) an der Halterfläche (7) des Halters (1) anliegt, wobei der Befestigungsabschnitt (15) mit einer axialen Gewindebohrung (18) für eine von der Gegenfläche (8) des Halters (1) aus einzuschraubende Befestigungsschraube versehen ist.

9. Abutment nach Anspruch 8, **dadurch gekennzeichnet, dass** der Befestigungsabschnitt (15) zylinderförmig ausgestaltet ist.

10. Abutment nach einem der Ansprüche 8 bis 9, **dadurch gekennzeichnet, dass** der Zentralabschnitt (13) an seiner dem Befestigungsabschnitt (15) abgewandten Axialseite (22) in einen Verankerungsabschnitt (23) mit kleinerem Durchmesser (24) übergeht, der als Interface zum Zahnimplantat und zur Verankerung des Abutments (12) am Zahnimplantat dient.

11. Abutment nach Anspruch 10, **dadurch gekennzeichnet, dass** der Verankerungsabschnitt (23) zylindrisch ausgestaltet ist und eine zentrale Bohrung (25) zum Durchgang einer Verankerungsschraube aufweist.

## Claims

1. Holder (1) for at least one abutment (12) for dental implants for clamping in a dental milling system, wherein the abutment (12) has a central portion (13) which is designed as a cylindrical body and transitions on one axial side into a pin-shaped fastening portion (15) having a smaller diameter for fastening the abutment (12) to the holder (1), wherein the holder (1) has a holder surface (7) in which, for each abutment (12) to be held, a fastening hole (6) is arranged which extends through to an opposite counter-surface (8) of the holder (1) and into which the fastening portion (15) of the abutment (12) can be received such that an end face (14) of the central portion (13) of the abutment (12) that surrounds the fastening portion (15) of the abutment (12) rests against the holder surface (7), wherein the holder (1) has a ridge (21) protruding from the holder surface (7), wherein the ridge (21) has a complementary shape to a linear groove (20) with which the end face (14) of the abutment to be received is provided adjacent to the fastening portion (15), so that the groove (20) of the abutment to be received can be positively engaged in the ridge (21).

2. Holder according to claim 1, **characterised in that** it is substantially cuboid.

3. Holder according to either claim 1 or claim 2, **characterised in that** said holder surface (7) is provided with three linearly adjacent fastening holes (6) for holding three abutments (12).

4. Holder according to claim 3, **characterised in that** the ridge (21) extends over the length of the holder (1) and adjacently to the fastening holes (6).

5. Holder according to either claim 3 or claim 4, **characterised in that** it is provided with two continuous clamping holes (3) for the passage of two clamping screws intended for clamping the holder (1) in a dental milling system, the clamping holes (3) being arranged between the fastening holes (6) in the longitudinal direction, and their axial direction being transverse with respect to the axial direction of the fastening holes (6).

6. Holder according to any of the preceding claims, **characterised in that** a contact surface (4) of the holder (1) provided for contact with a clamping device of a dental milling system is provided with protruding knobs (5) for positive engagement with complementary position holes of the dental milling system.

7. Holder according to any of the preceding claims, **characterised in that** the fastening holes (6) are designed as stepped holes.

8. Abutment (12) for dental implants for clamping in a dental milling system, having a cylindrical central portion (13) which transitions on one axial side (14) into a pin-shaped fastening portion (15) having a smaller diameter (16), which portion is used to fasten the abutment (12) to a holder (1) for clamping in a dental milling system, wherein the holder (1) has a holder surface (7) in which, for each abutment (12) to be held, a fastening hole (6) that extends through to an opposite counter-surface (8) of the holder (1) is arranged and from which holder surface (7) a ridge (21) protrudes, wherein an end face (14) of the central portion (13) that surrounds the fastening portion (15) is provided with a linear groove (20) that is adjacent to the fastening portion (15), wherein the groove (20) has a complementary shape to the ridge (21) of the holder (1), so that the groove (20) can be brought into positive engagement with the ridge (21), wherein the fastening portion (15) can be received in the fastening hole (6) of the holder (1) such that the end face (14) rests against the holder surface (7) of the holder (1), wherein the fastening portion (15) is provided with an axial threaded hole (18) for a fastening screw to be screwed in from the counter-surface (8) of the holder (1).

9. Abutment according to claim 8, **characterised in that** the fastening portion (15) is cylindrical.

10. Abutment according to either claim 8 or claim 9, **characterised in that** the central portion (13) transitions on its axial side (22) facing away from the fastening portion (15) into an anchoring portion (23) having a smaller diameter (24), which anchoring portion is used as an interface to the dental implant and to anchor the abutment (12) to the dental implant.

11. Abutment according to claim 10, **characterised in that** the anchoring portion (23) is cylindrical and has a central hole (25) for the passage of an anchoring screw.

## Revendications

1. Support (1) pour au moins un pilier (12) pour des implants dentaires, destiné à être enserré dans un système de fraise dentaire, dans lequel le pilier (12) présente une section centrale (13), qui est configurée en tant que corps cylindrique et devient, au niveau d'un côté axial, une section de fixation (15) en forme de cône avec un diamètre plus petit pour fixer le pilier (12) au support (1), dans lequel le support (1) présente une surface de support (7), dans laquelle est disposé, pour chaque pilier (12) à maintenir, un alésage de fixation (6) traversant vers une contre-surface (8) opposée du support (1), dans lequel la section de fixation (15) du pilier (12) peut être logée de telle manière qu'une surface frontale (14), entourant la section de fixation (15) du pilier (12), de la section centrale (13) du pilier (12) repose au niveau de la surface de support (7), dans lequel le support (1) présente une bavure (21) faisant saillie de la surface de support (7), dans lequel la bavure (21) est formée de manière complémentaire à une rainure (20) linéaire, dont est pourvue la surface frontale (14) du pilier à loger de manière adjacente à la section de fixation (15), si bien que la rainure (20) du pilier à loger peut être amenée en prise par complémentarité de forme avec la bavure (21).

2. Support selon la revendication 1, **caractérisé en ce qu'**il est configuré sensiblement en forme carrée.

3. Support selon la revendication 1 ou 2, **caractérisé en ce que** ladite surface de support (7) est pourvue de trois alésages de fixation (6) disposés côte à côte de manière linéaire pour le maintien de trois piliers (12).

4. Support selon la revendication 3, **caractérisé en ce que** la bavure (21) s'étend sur la longueur du support (1) et de manière adjacente aux alésages de fixation (6).

5. Support selon la revendication 3 ou 4, **caractérisé en ce qu'**il est pourvu de deux alésages d'enserrage (3) traversants pour le passage de deux vis d'enserrage destinées à enserrer le support (1) dans un système de fraise dentaire, dans lequel les alésages d'enserrage (3) sont disposés dans le sens longitudinal entre les alésages de fixation (6) et leur sens axial de manière transversale par rapport au sens axial des alésages de fixation (6).

6. Support selon l'une quelconque des revendications précédentes, **caractérisé en ce qu'**une surface d'appui (4), prévue pour venir en appui au niveau d'un dispositif d'enserrage d'un système de fraise dentaire, du support (1) est pourvue de picots (5) faisant saillie pour venir en prise par complémentarité de forme avec des trous de positionnement complémentaires du système de fraise dentaire.

7. Support selon l'une quelconque des revendications précédentes, **caractérisé en ce que** les alésages de fixation (6) sont configurés en tant qu'alésages étagés.

8. Pilier (12) pour implants dentaires destiné à être enserré dans un système de fraise dentaire, avec une section centrale (13) cylindrique, qui devient au niveau d'un côté axial (14) une section de fixation (15) en forme de cône avec un diamètre (16) plus petit, qui sert à la fixation du pilier (12) au niveau d'un support (1) destiné à être enserré dans un système de fraise, dans lequel le support (1) présente une surface de support (7), dans laquelle est disposé, pour chaque pilier (12) à maintenir, un alésage de fixation (6) traversant vers une contre-surface (8) opposée du support (1) et de laquelle surface de support (7) une bavure (21) fait saillie, dans lequel une surface frontale (14), entourant la section de fixation (15), de la section centrale (13) est pourvue d'une rainure (20) linéaire adjacente par rapport à la section de fixation (15), dans lequel la rainure (20) est formée de manière complémentaire par rapport à la bavure (21) du support (1) si bien que la rainure (20) peut être amenée en prise par complémentarité de forme avec la bavure (21), dans lequel la section de fixation (15) peut être logée de telle manière dans l'alésage de fixation (6) du support (1) que la surface frontale (14) repose au niveau de la surface de support (7) du support (1), dans lequel la section de fixation (15) est pourvue d'un alésage fileté (18) axial pour une vis de fixation à visser depuis la contre-surface (8) du support (1).

9. Pilier selon la revendication 8, **caractérisé en ce que** la section de fixation (15) est configurée en forme de cylindre.

10. Pilier selon l'une quelconque des revendications 8 à 9, **caractérisé en ce que** la section centrale (13) devient au niveau de son côté axial (22) opposé à la section de fixation (15) une section d'ancrage (23) avec un diamètre (24) plus petit, qui fait office d'interface avec l'implant dentaire et sert à l'ancrage du pilier (12) au niveau de l'implant dentaire.

11. Pilier selon la revendication 10, **caractérisé en ce que** la section d'ancrage (23) est configurée de manière cylindrique et présente un alésage (25) central pour le passage d'une vis d'ancrage.
